# EUROPEAN PATENT SPECIFICATION

(11) **EP 4 117 103 B1**
(45) Date of publication and mention of the grant of the patent: **15.04.2026**
(21) Application number: 21862135.7
(22) Date of filing: 27.08.2021
(51) Int. Cl.: H01M 50/409, H01M 50/449, H01M 50/403, H01M 10/42, H01M 50/417, H01M 50/446, H01M 50/451

(54) **SEPARATOR COMPRISING VARIABLE BINDER HAVING SIZE VARYING ACCORDING TO PH AND METHOD FOR MANUFACTURING SEPARATOR THEREFOR**
SEPARATOR MIT EINEM VARIABLEN BINDEMITTEL MIT EINER GRÖSSE, DIE SICH ENTSPRECHEND DEM PH-WERT ÄNDERT, UND VERFAHREN ZUR HERSTELLUNG DES SEPARATORS DAFÜR
SÉPARATEUR COMPRENANT UN LIANT VARIABLE PRÉSENTANT UNE TAILLE VARIANT EN FONCTION DU PH ET PROCÉDÉ DE FABRICATION D'UN SÉPARATEUR ASSOCIÉ

(30) Priority: 28.08.2020 KR 20200109204
(43) Date of publication of application: 11.01.2023
(73) Proprietor: LG Energy Solution, Ltd., Seoul 07335 (KR)
(72) Inventor: LEE, Seung Hyun, Daejeon 34122 (KR); KWON, Hye Jin, Daejeon 34122 (KR); KA, Kyung Ryun, Daejeon 34122 (KR); LEE, Je An, Daejeon 34122 (KR)
(74) Representative: Hoffmann Eitle
(86) International application number: PCT/KR2021/011546
(87) International publication number: WO 2022/045839

(56) References cited:
- EP-A1- 3 226 333
- JP-A- 2003 272 705
- JP-A- 2003 272 705
- JP-A- 2009 016 199
- JP-B2- 5 892 713
- KR-A- 20070 042 944
- KR-A- 20070 042 944
- KR-A- 20170 085 510

## Description

### [Technical Field]

The present invention relates to a separator including a variable binder having a size changed depending on pH and a method of manufacturing the same. More particularly, the present invention relates to a separator including a separator substrate and a coating layer located on at least one surface of the separator substrate, wherein the coating layer includes a variable binder having a size changed depending on pH, and a method of manufacturing the same.

### [Background Art]

A separator, which is a component constituting a secondary battery, includes a polymer membrane having a porous structure located between a positive electrode and a negative electrode. The separator serves to isolate the positive electrode and the negative electrode from each other, to prevent electrical short circuit between the two electrodes, and to allow an electrolyte and ions to pass therethrough. The separator itself does not participate in electrochemical reaction of the battery. However, the separator affects the performance and safety of the battery due to physical properties thereof, such as electrolytic solution wettability, porosity, and heat shrinkage. Throughout this specification, the separator includes both a separator constituted by only a separator substrate and a separator manufactured by coating at least one surface of the separator substrate with an inorganic material.

In recent years, methods of adding a coating layer to the separator substrate, adding various materials to the coating layer, or changing physical properties of the coating layer have been used in order to improve physical properties of the separator. As an example, an inorganic material capable of increasing mechanical strength may be added to the coating layer, or an inorganic material or hydrate capable of improving flame retardancy and heat resistance of the separator substrate may be added to the coating layer. In order to increase force of adhesion between the separator and the positive electrode or the negative electrode or to uniformly distribute the inorganic material, a variable binder may be used in the coating layer.

In general, the variable binder may be classified as an oil-based variable binder that is used in a state of being dissolved in an organic solvent or an aqueous variable binder that is used in a state of being dissolved in an aqueous solvent, such as water.

The oil-based variable binder has an advantage of higher adhesive force than the aqueous variable binder but has a disadvantage in that, when insufficiently dried, the surface of the coating layer remains sticky, whereby external dust may stick thereto, and therefore a product defect rate may be increased. When the oil-based variable binder is dried, a gel is formed as the result of volatilization of the organic solvent, and the organic solvent is captured between gel particles, whereby a non-uniform coating layer may be formed, which may cause problems of degradation in performance of the battery and reduction in safety of the battery.

For the oil-based variable binder, an organic solvent having high volatility is used when a slurry for coating is formed, whereby it is difficult to maintain uniform concentration of the slurry and chemical properties of materials in the slurry may be changed.

For these reasons, the aqueous variable binder, which is minimally hazardous to human health and concentration of which is easily adjusted, is preferred. Since adhesive force of the aqueous variable binder is lower than adhesive force of the oil-based variable binder, the aqueous variable binder must be used in a larger amount. In the coating having the aqueous variable binder added thereto, the content of the variable binder based on the inorganic composition is high, compared to the coating having the oil-based variable binder added thereto. As a result, pores of the separator may be blocked, whereby impregnability of the separator with the electrolytic solution may be reduced, or the coating layer may act as a resistor, whereby the capacity and lifespan of the battery may be reduced. Therefore, much research on an aqueous variable binder having high adhesive force or composition of a variable binder to increase adhesive force has been conducted.

EP3226333A1 discloses a coating layer comprising a variable binder having a particle size changed depending on pH. In Patent Document 1, a porous coating layer including inorganic particles and an acrylic-based copolymer variable binder polymer mixed in a weight ratio of 70:30 to 90:10 in order to improve impregnability of the porous coating layer with an electrolytic solution is provided, wherein the ratio of the variable binder polymer to the inorganic material is regularly adjusted, whereby resistance is reduced while force of adhesion with an electrode is secured, and therefore lifespan characteristics of a battery are improved.

In Patent Document 2, an adhesive layer capable of increasing adhesive force without including an inorganic material is separately provided. When the adhesive layer is applied to a cylindrical secondary battery, performance of a separator itself seems to be improved. Since there exists a part that has no connection with an increase in capacity of the battery or improvement in safety of the battery through the inorganic material, however, the adhesive layer does not greatly contribute to improvement in overall performance of the battery.

Therefore, it is necessary to develop a new binder capable of reducing resistance of a battery while providing only adhesive force necessary for a separator.

### (Prior Art Documents)

(Patent Document 1) Korean Patent Application Publication No. 2017-0095024 ("Patent Document 1")
(Patent Document 2) Korean Patent Application Publication No. 2019-0084894 ("Patent Document 2")

### [Disclosure]

### [Technical Problem]

The present invention has been made in view of the above problems, and it is an object of the present invention to provide a separator configured such that resistance of a battery is reduced while only adhesive force necessary for a separator coating layer is provided and a method of manufacturing the same.

### [Technical Solution]

In order to accomplish the above object, the present invention provides a separator including a separator substrate and a coating layer located on at least one surface of the separator substrate, wherein the coating layer includes a variable binder having a size changed depending on pH.

The particle size of the variable binder may be reduced as pH is lowered.

The variable binder may be an aqueous variable binder.

The variable binder may include an ester group (-COO) .

The variable binder may be an aqueous binder and comprise an ester group.

The variable binder may have a degree of crosslinking of 80 mol% to 98 mol%.

The separator substrate may be a polyolefin substrate.

The coating layer may include an inorganic material.

The present invention provides a method of manufacturing the separator, the method including S1) mixing a variable binder having a size changed depending on pH with an inorganic material to form a coating layer slurry and S2) applying the coating layer slurry to at least one surface of a separator substrate to form a coating layer.

In step S1, the coating layer slurry may have a pH of 7 or more.

In step S1, the coating layer slurry further includes a solvent that may have a pH of 7 or more.

In step S1, the variable binder may have a particle size of 200 nm or more.

The method may further include S3) allowing the variable binder of the coating layer to react with hydrogen ions generated by reaction of an electrolytic solution, wherein the particle size of the variable binder is reduced.

In the present invention, one or more constructions that do not conflict with each other may be selected and combined from among the above constructions.

### [Advantageous effects]

As is apparent from the above description, a separator according to the present invention includes a variable binder having a size changed depending on pH, whereby resistance of the separator is reduced and performance of a battery is improved.

In addition, since the size of a variable binder in a coating layer according to the present invention is changed depending on pH, the coating layer may be formed using a minimum amount of the variable binder. As a result, density of an inorganic material is increased, and therefore performance of the coating layer based on the thickness thereof is improved.

In addition, since resistance of the coating layer is reduced in proportion to use of the battery, lifespan of the battery is increased.

### [Description of Drawings]

FIG. 1 is a schematic view showing that the shape of a separator according to the present invention is changed depending on pH.
FIG. 2 is a graph showing a change in particle size of a variable binder according to the present invention and a non-variable binder depending on pH.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, the present invention will be described in more detail.

A separator according to the present invention includes a separator substrate and a coating layer located on at least one surface of the separator substrate, wherein the coating layer includes a variable binder having a size changed depending on pH.

### Separator substrate

The separator substrate electrically insulates a positive electrode and a negative electrode from each other, thereby preventing short circuit, and provides a movement path of lithium ions. A porous film having high resistance to an electrolytic solution, which is an organic solvent, and a very small pore diameter may be used. The separator substrate is not particularly restricted as long as the separator substrate can generally be used as the material for a separator of a secondary battery. For example, the separator substrate may include a resin, such as a polyolefin-based resin (polyethylene, polypropylene, or polybutene), polyvinyl chloride, or a mixture or copolymer thereof, or may include a resin, such as polyethylene terephthalate, polycycloolefin, polyethersulfone, polyamide, polyimide, polyimide-amide, polyaramide, polycycloolefin, nylon, or polytetrafluoroethylene. Thereamong, the polyolefin-based resin is preferably used, since applicability of a slurry for porous coating layers is high and the thickness of a separator for secondary batteries is reduced, whereby the percentage of the electrode active material layer in the battery is increased and thus the capacity per unit volume thereof is increased. More preferably, the separator substrate according to the present invention is polyolefin, including polyethylene or polypropylene.

The thickness of the separator substrate may be 1 µm to 100 µm, preferably 1 µm to 30 µm. The pore diameter of the separator substrate may generally be 0.01 µm to 10 µm.

### Coating layer

Although the thickness of the coating layer is not particularly restricted, it is basically preferable for the coating layer to have a sufficient thickness to exhibit a coating layer addition effect while the capacity of the secondary battery is high. In consideration thereof, the thickness of the coating layer according to the present invention may be 1 µm to 20 µm. If the coating layer is thinner than 1 µm, a sufficient amount of variable binder is not included, which is undesirable. If the coating layer is thicker than 20 µm, energy density is reduced, which is also undesirable.

The coating layer may be located on at least one surface of the separator substrate. In order to improve effects of adhesion with the battery and addition of an inorganic material, it is preferable for the coating layer to be located on opposite surfaces of the separator substrate.

### Inorganic material

An inorganic material may be included in the coating layer in order to increase mechanical strength of the separator. The inorganic material is not particularly restricted as long as the inorganic material provides a uniform thickness to the coating layer and does not undergo oxidation and/or reduction within an operation voltage range of a secondary battery to which the present invention is applied. Particularly, in the case in which inorganic particles having ion transfer ability are used, ionic conductivity of an electrochemical device may be improved, whereby performance of the battery may be improved. Also, in the case in which inorganic particles having high permittivity are used as the inorganic particles, the degree of dissociation of electrolyte salt, e.g. lithium salt, in a liquid electrolyte may be increased, whereby ionic conductivity of the electrolytic solution may be improved.

An example of the inorganic material may be may be an inorganic material having at least one of lithium ion transfer ability, piezoelectricity, and flame retardancy.

The inorganic material having high lithium ion transfer ability refers to an inorganic material that contains a lithium element but moves lithium ions without storage of lithium. The inorganic material having lithium ion transfer ability is capable of transferring and moving lithium ions due to a kind of defect present in a particle structure thereof. Consequently, lithium ion conductivity in the battery may be improved, whereby performance of the battery may be improved.

The inorganic material having lithium ion transfer ability may be, for example, at least one selected from the group consisting of lithium phosphate, lithium titanium phosphate, lithium aluminum titanium phosphate, (LiAlTiP)ₓO_{y}-based glass, lithium lanthanum titanate, lithium germanium thiophosphate, lithium nitride (LiₓN_{y}, 0<x<4, 0<y<2), such as Li₃N, SiS₂-based glass (LiₓSi_{y}S_{z}, 0<x<3, 0<y<2, 0<z<4), such as Li₃PO₄-Li₂S-SiS₂, P₂S₅-based glass (LiₓP_{y}S_{z}, 0<x<3, 0<y<3, 0<z<7), such as LiI-Li₂S-P₂S₅, and a mixture thereof. However, the present invention is not limited thereto.

The inorganic material having piezoelectricity, which means a material that is a nonconductor at atmospheric pressure but has a physical property, such as electrical conduction, due to a change in internal structure thereof when predetermined pressure is applied thereto, is a material that has a permittivity constant of 100 or more, i.e. high permittivity, and is configured such that one surface thereof is charged with positive electricity while the other surface thereof is charged with negative electricity when predetermined pressure is applied thereto so as to be tensed or compressed, whereby potential difference is generated between the opposite surfaces thereof.

In the case in which the inorganic material having the above characteristics is used, when internal short circuit occurs between the positive electrode and the negative electrode due to external impact caused by local crush, a nail, etc., the positive electrode and the negative electrode do not directly contact each other due to the inorganic particles formed on the separator by coating, and a potential difference is generated in the inorganic particles due to piezoelectricity of the inorganic particles, whereby electrons move between the positive electrode and the negative electrode, i.e. microcurrent flows therebetween, and therefore voltage of the battery is slowly reduced and thus safety of the battery is improved.

The inorganic particles having piezoelectricity may be, for example, BaTiO₃, Pb(Zr,Ti)O₃ (PZT), Pb₁₋ₓLaₓZr_{1-y}Ti_{y}O₃ (PLZT), Pb (Mg_{1/3}Nb_{2/3})O₃-PbTiO₃ (PMN-PT), hafnia (HfO₂), or a mixture thereof. However, the present invention is not limited thereto.

The inorganic material having flame retardancy may be at least one selected from the group consisting of an antimony-containing compound, a metal hydroxide or metal hydrate, a guanidine-based compound, a boron-containing compound, and a zinc stannate compound.

The antimony-containing compound is one selected from among antimony trioxide (Sb₂O₃), antimony tetroxide (Sb₂O₄), and antimony pentoxide (Sb₂O₅). The metal hydroxide or the metal hydrate is one selected from among magnesium hydroxide, aluminum hydroxide (Al(OH)₃), aluminum oxyhydroxide (AlO(OH)), and CaO·Al₂O₃·6H₂O. The guanidine-based compound is one selected from among guanidine nitrate, guanidine sulfamate, guanidine phosphate, and guanylurea phosphate. The boron-containing compound is H₃BO₃ or HBO₂. The zinc stannate compound is one selected from among Zn₂SnO₄, ZnSnO₃, and ZnSn(OH)₆.

Specifically, the inorganic material having flame retardancy may be at least one selected from among magnesium hydroxide (Mg(OH)₂), aluminum hydroxide (Al(OH)₃), aluminum oxyhydroxide (AlO(OH)), and CaO·Al₂O₃·6H₂O.

As the result of adding the inorganic material having flame retardancy, it is possible to prevent overcharging, to add flame retardant characteristics to the separator, or to prevent an abrupt increase in temperature of the battery. Among the inorganic materials having flame retardancy according to the present invention, the metal hydroxide is decomposed as dehydration reaction, which is an endothermic reaction, occurs with an increase in temperature. At this time, an additional flame retardant effect may be obtained due to the endothermic reaction and generated water.

In order to improve flame retardancy of the inorganic material having flame retardancy, a flame-retardant synergist may be further included. The flame-retardant synergist may be a silicon-based additive, zinc oxide, tin oxide, a nickel compound, zinc borate, a melamine compound, or a mixture of two or more thereof.

The flame-retardant synergist may be used in various combinations depending on the characteristics of the inorganic material having flame retardancy. A flame-retardant synergist other than the flame-retardant synergist mentioned above may be further included as a material capable of improving efficiency of the inorganic material having flame retardancy. In addition, halogen may be further added, or phosphorous or a phosphorous compound may also be added. The flame-retardant synergist may be provided to the extent to which it is possible to improve efficiency of the inorganic material having flame retardancy. The flame-retardant synergist may be added so as to account for 0.001 times to 0.1 times the total weight of the inorganic material having flame retardancy.

In addition, an absorbent configured to absorb water molecules generated from the inorganic material having flame retardancy; however the absorbent is limited to a material that does not reduce performance of the battery. Any of ordinary materials may be used without limitation as the absorbent. For example, zeolite, porous silica, or porous alumina may be used. However, the present invention is not limited thereto.

Although the particle size of the inorganic material is not particularly restricted, D50 may have a range of 20 nm to 10 µm, specifically 100 nm to 1 µm, in consideration of the purpose to form a coating layer having a uniform thickness and to provide appropriate porosity.

In a particle size distribution curve of particles, D50 means the particle size of particles equivalent to 50% of the accumulated number of particles, and the average particle size of the inorganic particles was measured using a Particle Size Analyzer (Product Name: MASTERSIZER 3000; Manufacturer: Malvern).

The inorganic material may be included so as to account for 10 weight% to 90 weight% based on the weight of the entire solid content of the coating layer. If the content of the inorganic material is less than 10 weight%, it is difficult to achieve an effect that can be obtained as the result of addition of the inorganic material, which is undesirable. If the content of the inorganic material is greater than 90 weight%, the content of the variable binder is too small, whereby the force of adhesion between the inorganic particles may be reduced, and therefore the inorganic coating layer may be separated from the separator substrate or an uncoated region may be generated at the time of coating, which is also undesirable.

### Variable binder

The coating layer according to the present invention may include a variable binder in order to prevent the inorganic material from being separated from the coating layer. The inorganic material and the variable binder may be uniformly distributed in the coating layer. Since the inorganic material is uniformly distributed in the variable binder, resistance in the secondary battery may be uniformly formed, whereby occurrence of short circuit at a specific portion may be prevented.

The variable binder may become a gel at the time of impregnation of an electrolytic solution, thereby exhibiting high electrolytic solution impregnability. In the case in which the variable binder polymer is a polymer having high electrolytic solution impregnability, the polymer may be impregnated with an electrolytic solution injected after assembly of the battery, the polymer having the electrolytic solution absorbed thereinto exhibits electrolyte ion conduction ability. In addition, wettability with respect to an electrolytic solution for batteries is improved, compared to a conventional hydrophobic polyolefin-based separator, and application of a polar electrolytic solution for batteries, which is conventionally difficult to use, is also possible. Consequently, it is preferable for the gel content of the variable binder, i.e. solubility of the variable binder in the solvent, to be greater than 60% and to be less than 100%. If the gel content of the variable binder is 60% or less, voltage fluctuation occurs due to flow of the polymer when the electrode is heated and dried, whereby use thereof is impossible. If the gel content of the variable binder is 100% or more, performance of the variable binder may be insufficient, whereby adhesive strength may be reduced. If possible, it is preferable for the variable binder to be a polymer having a solubility index of 15 MPa^{1/2} to 45 MPa^{1/2}, more preferably 15 MPa^{1/2} to 25 MPa^{1/2} and 30 MPa^{1/2} to 45 MPa^{1/2}. If the solubility index is less than 15 MPa^{1/2} and greater than 45 MPa^{1/2}, it is difficult to achieve impregnation (swelling) by an ordinary liquid electrolytic solution for batteries.

The variable binder may be included so as to account for 10 weight% or more, specifically 50 weight% or more, more specifically 60 weight% or more, based on the entire solid content of the coating layer.

Specifically, the kind of the variable binder is not limited as long as the variable binder has a particle size changed depending on pH while not affecting performance of the battery. As an example, it is preferable for the variable binder to be an aqueous variable binder in consideration of hazards to human health, influence on the environment, and ease in concentration adjustment. In addition, the variable binder may include an ester group so as to be easily deformable. In the case in which the ester group is included, the variable binder may have a property in which the size of the variable binder is changed depending on pH.

As an example, the variable binder may be configured to have a structure in which an ester group is introduced into an aqueous binder. The aqueous binder may be at least one selected from the group consisting of an acrylate-styrene-based polymer, an acrylonitrile-butadiene-based polymer, a styrenebutadiene-based polymer, a polyacrylonitrile-styrene-based polymer, an acrylic-based polymer, hydroxyethyl cellulose, carboxymethyl cellulose, and an acrylate-based polymer.

In addition, the degree of crosslinking of the variable binder may be 80 mol% to 98 mol%. In order to increase the degree of crosslinking of the variable binder, a crosslinking accelerator may be added to the coating layer slurry. The crosslinking accelerator may be added so as to account for 0.1 parts by weight to 50 parts by weight based on 100 parts by weight of the variable binder. Primary or higher polyamines having various functional groups per molecule, such as polyisocyanate, diethylene triamine (DETA), triethylenediamine (TEDA), or triethylene tetramine (TETA), may be used as the crosslinking accelerator. However, the present invention is not limited thereto.

The particle size of the variable binder when being first added to the slurry may be 200 nm or more. If the particle size of the variable binder is less than 200 nm, the amount of the variable binder that is added to the slurry is increased, whereby no desired effect may be obtained. Subsequently, even in the case in which the size of the variable binder is changed depending on pH, whereby the variable binder has the smallest size, the particle size of the variable binder may be 110 nm or more. If the particle size of the variable binder is less than 110 nm, the size of the variable binder is too small, whereby force of adhesion to the inorganic material may be reduced.

In the case in which the rate of change in the particle size is 50% or more, the particle size is too small, whereby resistance of the battery may be increased. For this reason, it is preferable for the rate of change in the particle size of the variable binder to be less than 50%. In the case in which the rate of change in the particle size of the variable binder is too great, the coating layer may be separated from the separator substrate, or force of adhesion therebetween may be reduced. Consequently, it is preferable for the rate of change in the particle size of the variable binder when pH is decreased or increased based on the particle size of the variable binder when pH is 7 to be 20% to 45%.

The size of the variable binder may be adjusted by adjusting the content of a polyacrylic-acid-based dispersant or a tannic-acid-based dispersant.

The variable binder may be included so as to account for less than 40 weight% based on the solid content of the coating layer slurry. If too much variable binder is present, the variable binder may act as resistance even though the size of the variable binder is reduced, or rather, the binder having the reduced size may be attached to an undesired region, whereby performance of the battery may be reduced.

In the separator according to the present invention, the particle size of the variable binder may be reduced as pH is lowered.

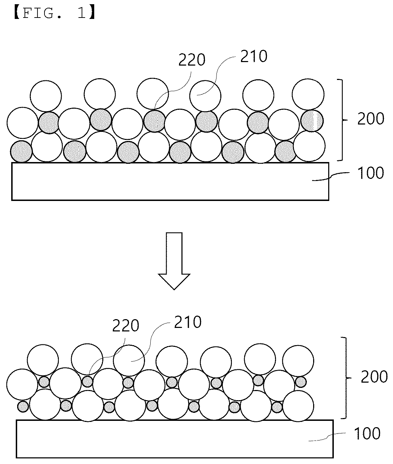

FIG. 1 is a schematic view showing that the shape of a separator according to the present invention is changed depending on pH. Referring to FIG. 1, the left part of FIG. 1 is a schematic view before the size of a variable binder 220 is reduced, and the right part of FIG. 1 is a schematic view after the size of the variable binder 220 is reduced.

As can be seen from FIG. 1, the separator according to the present invention is configured such that a coating layer 200 is added onto a separator substrate 100. The coating layer 200 includes an inorganic material 210 and a variable binder 220. The variable binder 220 is disposed between inorganic material particles 210 to prevent the inorganic material 210 from being separated from the coating layer 200. The variable binder 220 may be uniformly disposed between the inorganic material particles 210. As pH is lowered, the size of the variable binder 220 is reduced, whereby space between the inorganic material particles 210 is reduced, and therefore force of binding between the inorganic material particles 210 is increased. In addition, the space in the coating layer 200 that the inorganic material 210 and the variable binder 220 occupy is reduced, whereby air permeability is improved while resistance is reduced.

### Dispersant

The coating layer may further include a dispersant in order to further improve dispersibility of the inorganic material. The dispersant serves to maintain the state in which the inorganic material is uniformly dispersed in the variable binder at the time of manufacturing a coating layer slurry. For example, an anionic surfactant may be used in order to maintain uniform dispersion while increasing dispersibility.

An anionic component containing at least one selected from the group consisting of carboxylate, phosphate, sulfonate, and sulfate may constitute a head portion of the anionic surfactant. Thereamong, sulfonate is preferably used as the head portion of the anionic surfactant.

A material having properties of a non-ionic surfactant may be used as a tail portion of the anionic surfactant. Although the material having properties of the non-ionic surfactant is not particularly restricted, a material including an alkyl group may be used. The material including the alkyl group may be polyalkylene oxide having 5 to 200 alkylene oxide repeat units. At this time, polyalkylene oxide may be at least one selected from the group consisting of polyethylene oxide, polypropylene oxide, and a polyethylene oxide-polypropylene oxide copolymer.

A typical example of the anionic surfactant is carboxyl methyl cellulose (CMC).

In addition, at least one selected from among oil-soluble polyamine, an oil-soluble amine compound, fatty acid, fatty alcohol, sorbitan fatty acid ester, tannic acid, and pyrogallic acid may be used as the dispersant.

The content of the dispersant may be 0.2 parts by weight to 10 parts by weight based on 100 parts by weight of the inorganic material. If the dispersant is included so as to account for less than 0.2 parts by weight based on 100 parts by weight of the inorganic material, the inorganic material may be easily precipitated. If the dispersant is included so as to account for greater than 10 parts by weight based on 100 parts by weight of the inorganic material, the force of adhesion of the coating to the separator substrate may be reduced or impurities may be generated as the result of reaction with the electrolytic solution at the time of manufacturing the secondary battery.

A unit cell according to the present invention includes a positive electrode, a negative electrode, and a separator disposed between the positive electrode and the negative electrode, wherein at least one of the above-mentioned separators may be used as the separator according to the present invention.

### Positive electrode

For example, the positive electrode may be manufactured by applying a positive electrode mixture of a positive electrode active material constituted by positive electrode active material particles, a conductive agent, and a binder to a positive electrode current collector. A filler may be further added to the positive electrode mixture as needed.

In general, the positive electrode current collector is manufactured so as to have a thickness of 3 µm to 500 µm. The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, or titanium. Alternatively, the positive electrode current collector may be made of aluminum or stainless steel, the surface of which is treated with carbon, nickel, titanium, or silver. Specifically, aluminum may be used. The current collector may have a micro-scale uneven pattern formed on the surface thereof so as to increase adhesive force of the positive electrode active material. The current collector may be configured in any of various forms, such as a film, a sheet, a foil, a net, a porous body, a foam body, and a non-woven fabric body.

In addition to the positive electrode active material particles, the positive electrode active material may be constituted, for example, by a layered compound, such as a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, LiV₃O₄, V₂O₅, or CU₂V₂O₇; an Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a portion of Li in the chemical formula is replaced by alkaline earth metal ions; a disulfide compound; or Fe₂(MoO₄)₃. However, the present invention is not limited thereto.

The conductive agent is generally added so that the conductive agent accounts for 0.1 weight% to 30 weight% based on the total weight of the mixture including the positive electrode active material. The conductive agent is not particularly restricted as long as the conductive agent exhibits high conductivity without inducing any chemical change in a battery to which the conductive agent is applied. For example, graphite, such as natural graphite or artificial graphite; carbon black, such as acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder, which is included in the positive electrode, is a component assisting in binding between the active material and the conductive agent and in binding with the current collector. The binder is generally added in an amount of 0.1 weight% to 30 weight% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinyl pyrrolidone, tetrafluoroethylene, polyethylene, polypropylene, ethylene-propylene-diene terpolymer, styrene butadiene rubber, fluoro rubber, and various copolymers.

### Negative electrode

The negative electrode may be manufactured by applying a negative electrode active material to a negative electrode current collector and drying the same. The above-described components may be optionally further included as needed.

The negative electrode current collector is generally manufactured so as to have a thickness of 3 µm to 500 µm. The negative electrode current collector is not particularly restricted, as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. In addition, the negative electrode current collector may have a micro-scale uneven pattern formed on the surface thereof so as to increase binding force of the negative electrode active material, in the same manner as the positive electrode current collector. The negative electrode current collector may be configured in any of various forms, such as a film, a sheet, a foil, a net, a porous body, a foam body, and a non-woven fabric body.

As the negative electrode active material, for example, there may be used carbon, such as a non-graphitizing carbon or a graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; or a Li-Co-Ni based material.

### Separator manufacturing method

A separator manufacturing method according to the present invention may include S1) a step of mixing a variable binder having a size changed depending on pH with an inorganic material to form a coating layer slurry and S2) a step of applying the coating layer slurry to at least one surface of a separator substrate to form a coating layer.

The separator substrate, inorganic material particles, and the variable binder have already been described above.

The step of forming the coating layer slurry on at least one surface of the separator substrate, a method of impregnating the separator substrate with a slurry manufactured by adding a coating composition including the inorganic material and the variable binder to a solvent or applying the slurry to the separator substrate may be used. Any of ordinary coating methods well-known in the art to which the present invention pertains may be used as the application or coating method. For example, dip coating, die coating, roll coating, comma coating, or a combination thereof may be used.

A drying step may be further performed after coating. The drying step may be performed using an oven or a heated type chamber within a temperature range set in consideration of vapor pressure of the solvent, or the porous substrate having the coating layer formed thereon may be exposed to room temperature such that the solvent volatilizes. At this time, conditions, such as a temperature range of 25°C to 100°C and a relative humidity of 40% or more, may be considered.

Any of ordinary solvents known in the art to which the present invention pertains may be used without limitation as the solvent necessary to manufacture the separator according to the present invention. Preferably, acetone, tetrahydrofuran, acetonitrile, dimethylformamide, dimethylsulfoxide, dimethylacetamide, N-methyl pyrrole, or water is used. A mixture of two or more thereof may also be used. At this time, it is preferable for pH of the slurry to be maintained uniform such that the variable binder has a predetermined size before being added to the coating layer. As an example, in the case in which the size of the variable binder according to the present invention is reduced depending on pH, it is preferable to use a solvent having a pH of 7 such that the size of the variable binder is maintained the greatest. In addition, it is preferable for pH of the slurry to be maintained uniform such that the size of the variable binder included in the slurry of step S1 is maintained uniform. To this end, it is preferable for pH of the slurry to be 7 or more. In addition, a polyacrylic-acid-based dispersant or a tannic-acid-based dispersant may be added in order to adjust pH of the slurry. pH of the slurry may be maintained uniform using the polyacrylic-acid-based dispersant or the tannic-acid-based dispersant.

It is preferable for the particle size of the variable binder used in step S1 to be 200 nm or more. If the particle size of the variable binder is small, it is difficult to dispose a predetermined amount of variable binder between the inorganic material particles. Consequently, it is advantageous for an initial variable binder to have large particles. Subsequently, it is preferable for the size of the variable binder to be reduced depending on a change in pH such that electrolytic solution impregnability is improved in the state in which only necessary adhesive force thereof is maintained between the inorganic material particles.

In addition, the separator manufacturing method may further include S3) a step of allowing the variable binder of the coating layer to react with hydrogen ions generated by reaction of the electrolytic solution such that the particle size of the variable binder is reduced. As the result of reaction, the electrolytic solution in the secondary battery generates hydrogen ions, whereby pH in the secondary battery is reduced. At this time, the hydrogen ions may further increase the particle size of the variable binder, whereby a reduction in performance of the battery due to use thereof may be offset.

The variable binder may be included so as to account for less than 40 weight% based on the solid content of the coating layer slurry. If too much variable binder is present, the variable binder may act as resistance even though the size of the variable binder is reduced, or rather, the binder having the reduced size may be attached to an undesired region, whereby performance of the battery may be reduced.

Hereinafter, the present invention will be described with reference to the following examples. These examples are provided only for easier understanding of the present invention and should not be construed as limiting the scope of the present invention.

### <Experimental Example 1> Comparison in particle size depending on pH

<Variable binder according to the present invention (Example)>

A methyl methacrylate butadiene styrene copolymer (styrene butadiene-co-MMA) having a weight average molecular weight (Mw) of 300,000 to 400,000 and a particle size of 230 nm was used.

### <Non-variable binder (Comparative Example)>

Styrene butadiene having a weight average molecular weight (Mw) of 300,000 to 400,000 and a particle size of 230 nm was used.

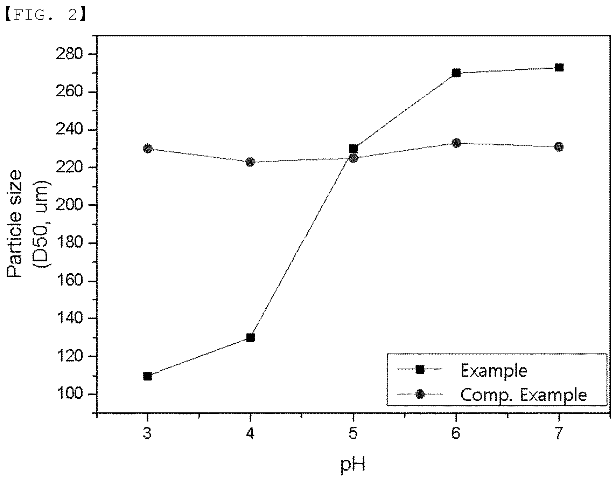

FIG. 2 is a graph showing a change in particle size of the variable binder according to the present invention and the non-variable binder depending on pH.

The methyl methacrylate butadiene styrene copolymer (styrene butadiene-co-MMA) (Example) and styrene butadiene (Comparative Example) were put in water, and the particle sizes thereof at pHs of 3, 4, 5, 6, and 7 were measured using a particle size measurement instrument, Mastersizer 300, at a refractive index of 1.46 and 200 rpm.

It can be seen from FIG. 2 that the particle size of the binder according to the present invention is remarkably reduced as pH is reduced, whereas the particle size of styrene butadiene, which is an ordinary binder, is not changed.

### <Experimental Example 2> Measurement of change in physical properties of binder-specific separator

Air permeability (Gurley) and resistance of each of separators according to Examples 1 to 3 and Comparative Examples 1 to 3 below and resistance values of unit cells using the separators were measured. The results are shown in Table 1 below.

### <Example 1>

One surface of a polyolefin substrate was coated with a coating slurry manufactured by mixing distilled water, a methyl methacrylate butadiene styrene copolymer (styrene butadiene-co-MMA), and aluminum hydroxide with each other through bar coating, and drying was performed at 80°C to 90°C to manufacture a separator.

At this time, the methyl methacrylate butadiene styrene copolymer (styrene butadiene-co-MMA) had a weight average molecular weight (Mw) of 300,000 to 400,000, a gel content of 98%, a pH of 5, and a particle size of 230 nm, and aluminum hydroxide has a D50 value of 800 nm to 1,000 nm.

In addition, aluminum hydroxide and the methyl methacrylate butadiene styrene copolymer (styrene butadiene-co-MMA) were mixed in a weight ratio of 40 wt%:60 wt% to manufacture the slurry. The solid content of the final slurry at the time of coating was 30 wt%.

### <Example 2>

A separator was manufactured through the same process as in Example 1 except that the methyl methacrylate butadiene styrene copolymer (styrene butadiene-co-MMA) had a pH of 7 and a particle size of 273 nm, compared to Example 1.

### <Example 3>

In Example 3, a separator was manufactured through the same process as in Example 1 except that the methyl methacrylate butadiene styrene copolymer (styrene butadiene-co-MMA) had a gel content of 80%, compared to Example 1.

### <Comparative Example 1>

In Comparative Example 1, A separator was manufactured through the same process as in Example 1 except that the methyl methacrylate butadiene styrene copolymer (styrene butadiene-co-MMA) had a pH of 3 and a particle size of 110 nm, compared to Example 1.

### <Comparative Example 2>

In Comparative Example 2, a separator was manufactured through the same process as in Example 1 except that the methyl methacrylate butadiene styrene copolymer (styrene butadiene-co-MMA) had a gel content of 60%, compared to Example 1.

### <Comparative Example 3>

In Comparative Example 3, a separator was manufactured through the same process as in Example 1 except that styrene butadiene was used instead of the methyl methacrylate butadiene styrene copolymer (styrene butadiene-co-MMA) and pH of styrene butadiene was 3, compared to Example 1.

### <Evaluation of air permeability>

Air permeability (Gurley) was measured according to ASTM D726-94. Gurley used herein, which is resistance to air flow, is measured using a Gurley densometer. An air permeability value described herein is indicated by time (seconds) taken for 100 cc of air to pass through a section of 1 in.² of each of the separators manufactured according to Comparative Examples and Examples under a pressure of 12.2 inH₂O, i.e. air permeation time.

### <Measurement of resistance values of separators>

The separators manufactured according to Examples 1 to 3 and Comparative Examples 1 to 3 were impregnated with a carbonate-based electrolytic solution having a pH of 4 to 5, and AC resistance of each of the separators was measured. The results are shown in Table 1 below. At this time, the AC resistance is a resistance value of the separator measured at 1 kHz using a Hioki tester.

### <Measurement of resistance values of unit cells>

A coin cell was manufactured using a positive electrode manufactured by forming a positive electrode active material layer including 90 weight% of lithium cobalt oxide, as a positive electrode active material, 6 weight% of PVdF, as a binder, and 4 weight% of carbon black, as a conductive agent, and having a thickness of 60 µm on aluminum foil, as a positive electrode current collector, a negative electrode manufactured by forming a negative electrode active material layer including 94 weight% of graphite, as a negative electrode active material, 2 weight% of CMC and 2 weight% of styrene butadiene rubber, as a binder, and 2 weight% of carbon black, as a conductive agent, and having a thickness of 70 µm on copper foil, as a negative electrode current collector, and each of the separators according to Examples 1 to 3 and Comparative Examples 1 to 3, and the resistance value of the coil cell was measured using Solartron analytical EIS under conditions of a frequency 300,000 to 0.1 Hz and an AC amplitude of 10 mA.

**(Table 1)**

| | Comparative Example 1 | Comparative Example 2 | Comparative Example 3 | Example 1 | Example 2 | Example 3 |
|---|---|---|---|---|---|---|
| Gurley (100 cc/sec) | 320 | 273 | 173 | 110 | 108 | 170 |
| ER (Ω) | 1.3 | 1.0 | 0.82 | 0.75 | 0.73 | 0.8 |
| Monocell resistance (2.5C, 10s) | 1.24 | 1.2 | 1.12 | 1.04 | 1. 04 | 1.1 |

It can be seen from Table 1 above that, as the particle size of the binder is reduced and the gel content of the binder is reduced, air permeability of the binder is increased, the resistance value of the separator is increased, and the resistance value of the unit cell is increased. In addition, it can be seen that air permeability and the resistance value of a binder including an ester group and the resistance value of a unit cell including the binder are less than air permeability and the resistance value of a binder including no ester group and the resistance value of a unit cell including the binder under the same conditions.

Consequently, it is preferable to use the variable binder in order to improve performance of the battery while providing desired adhesive force.

Those skilled in the art to which the present invention pertains will appreciate that various applications and modifications are possible within the category of the present invention based on the above description.

### (Description of Reference Numerals)

- 100:: Separator substrate
- 200:: Coating layer
- 210:: Inorganic material
- 220:: Variable binder

### [Industrial Applicability]

As is apparent from the above description, a separator according to the present invention includes a variable binder having a size changed depending on pH, whereby resistance of the separator is reduced and performance of a battery is improved.

In addition, since the size of a variable binder in a coating layer according to the present invention is changed depending on pH, the coating layer may be formed using a minimum amount of the variable binder. As a result, density of an inorganic material is increased, and therefore performance of the coating layer based on the thickness thereof is improved.

In addition, since resistance of the coating layer is reduced in proportion to use of the battery, lifespan of the battery is increased.

## Claims

1. A unit cell comprising a positive electrode, a negative electrode, and a separator disposed between the positive electrode and the negative electrode, the separator comprising:
a separator substrate; and
a coating layer located on at least one surface of the separator substrate, wherein
the coating layer comprises a variable binder polymer having a particle size changed depending on pH,
**characterised in that**:
the variable binder polymer becomes a gel at the time of impregnation of an electrolytic solution,
a gel content of the variable binder is greater than 60% and less than 100% in the electrolytic solution, and
the variable binder polymer is included sc as to account for 50 weight% or more based on the entire solid content of the coating layer.

2. The unit cell according to claim 1, wherein a particle size of the variable binder is reduced as pH is lowered.

3. The unit cell according to claim 1, wherein the variable binder is an aqueous binder.

4. The unit cell according to claim 1, wherein the variable binder comprises an ester group (-COO).

5. The unit cell according to claim 1, wherein the variable binder is an aqueous binder and comprises an ester group.

6. The unit cell according to claim 1, wherein the variable binder has a degree of crosslinking of 80 mol% to 98 mol%.

7. The unit cell according to claim 1, wherein the separator substrate is a polyolefin substrate.

8. The unit cell according to claim 1, wherein the coating layer comprises an inorganic material.

9. A method of manufacturing the unit cell according to any one of claims 1 to 8, the method comprising:
S1) mixing a variable binder polymer having a particle size changed depending on pH with an inorganic material to form a coating layer slurry; and
S2) applying the coating layer slurry to at least one surface of a separator substrate to form a coating layer,
**characterised in that**:
the variable binder polymer becomes a gel at the time of impregnation of an electrolytic solution,
a gel content of the variable binder is greater than 60% and less than 100% in the electrolytic solution, and
the variable binder polymer is included sc as to account for 50 weight% or more based on the entire solid content of the coating layer.

10. The method according to claim 9, wherein, in step S1, the coating layer slurry has a pH of 7 or more.

11. The method according to claim 9, wherein, in step S1, the coating layer slurry further comprises a solvent having a pH of 7 or more.

12. The method according to claim 9, wherein, in step S1, the variable binder has a particle size of 200 nm or more.

13. The method according to claim 9, further comprising S3) allowing the variable binder of the coating layer to react with hydrogen ions generated by reaction of an electrolytic solution, wherein a particle size of the variable binder is reduced.

## Patentansprüche

1. Einheitszelle, umfassend eine positive Elektrode, eine negative Elektrode und einen zwischen der positiven Elektrode und der negativen Elektrode angeordneten Separator, der Separator umfassend:
ein Separatorsubstrat; und
eine Beschichtung, die sich auf mindestens einer Oberfläche des Separatorsubstrats befindet, worin
die Beschichtung ein variables Bindemittelpolymer umfasst, das eine Teilchengröße aufweist, welche sich vom pH-Wert abhängig ändert, **dadurch gekennzeichnet, dass**:
das variable Bindemittelpolymer zur Zeit des Imprägnierens einer Elektrolytlösung ein Gel wird,
ein Gelgehalt des variablen Bindemittels in der Elektrolytlösung mehr als 60% und weniger als 100% beträgt, und
das variable Bindemittelpolymer so enthalten ist, dass es mindestens 50 Gew.-% oder mehr, bezogen auf den gesamten Feststoffgehalt der Beschichtung, ausmacht.

2. Einheitszelle gemäß Anspruch 1, worin sich die Teilchengröße des variablen Bindemittelpolymers verringert, wenn der pH erniedrigt wird.

3. Einheitszelle gemäß Anspruch 1, worin das variable Bindemittel ein wässriges Bindemittel ist.

4. Einheitszelle gemäß Anspruch 1, worin das variable Bindemittel eine Estergruppe (-COO) umfasst.

5. Einheitszelle gemäß Anspruch 1, worin das variable Bindemittel ein wässriges Bindemittel ist und eine Estergruppe umfasst.

6. Einheitszelle gemäß Anspruch 1, worin das variable Bindemittel einen Vernetzungsgrad von 80 Mol-% bis 98 Mol-% aufweist.

7. Einheitszelle gemäß Anspruch 1, worin das Separatorsubstrat ein Polyolefinsubstrat ist.

8. Einheitszelle gemäß Anspruch 1, worin die Beschichtung ein anorganisches Material umfasst.

9. Verfahren zur Herstellung der Einheitszelle gemäß einem der Ansprüche 1 bis 8, das Verfahren umfassend:
S1) das Mischen eines variablen Bindemittelpolymers, das eine Teilchengröße aufweist, welche sich vom pH-Wert abhängig ändert, mit einem anorganischen Material, so dass eine Beschichtungsaufschlämmung gebildet wird; und
S2) das Auftragen der Beschichtungsaufschlämmung auf mindestens eine Oberfläche des Separatorsubstrats, so dass eine Beschichtung gebildet wird, **dadurch gekennzeichnet, dass**:
das variable Bindemittelpolymer zur Zeit des Imprägnierens einer Elektrolytlösung ein Gel wird,
ein Gelgehalt des variablen Bindemittels in der Elektrolytlösung mehr als 60% und weniger als 100% beträgt, und
worin das variable Bindemittelpolymer so enthalten ist, dass es mindestens 50 Gew.-% oder mehr, bezogen auf den gesamten Feststoffgehalt der Beschichtung, ausmacht.

10. Verfahren gemäß Anspruch 9, worin die Beschichtungsaufschlämmung in Schritt S1 einen pH von 7 oder mehr aufweist.

11. Verfahren gemäß Anspruch 9, worin die Beschichtungsaufschlämmung in Schritt S1 ferner ein Lösungsmittel mit einem pH von 7 oder mehr umfasst.

12. Verfahren gemäß Anspruch 9, worin das variable Bindemittel in Schritt S1 eine Teilchengröße von 200 nm oder mehr aufweist.

13. Verfahren gemäß Anspruch 9, ferner umfassend S3), dass das variable Bindemittel mit Wasserstoffionen reagieren kann, die durch Reaktion einer Elektrolytlösung erzeugt sind, worin eine Teilchengröße des variablen Bindemittels verringert wird.

## Revendications

1. Cellule unitaire comprenant une électrode positive, une électrode négative, et un séparateur disposé entre l'électrode positive et l'électrode négative, le séparateur comprenant :
un substrat séparateur ; et
une couche de revêtement située sur au moins une surface du substrat séparateur, dans laquelle la couche de revêtement comprend un polymère liant variable présentant une taille de particule changée en fonction du pH,
**caractérisée en ce que** :
le polymère liant variable devient un gel lors de l'imprégnation d'une solution électrolytique,
une teneur en gel du liant variable est supérieure à 60 % et inférieure à 100 % dans la solution électrolytique, et
le polymère liant variable est inclus de sorte à représenter 50 % en poids ou plus sur la base de l'intégralité de la matière solide de la couche de revêtement.

2. Cellule unitaire selon la revendication 1, dans laquelle une taille de particule du liant variable est réduite lorsque le pH diminue.

3. Cellule unitaire selon la revendication 1, dans laquelle le liant variable est un liant aqueux.

4. Cellule unitaire selon la revendication 1, dans laquelle le liant variable comprend un groupe ester (-COO).

5. Cellule unitaire selon la revendication 1, dans laquelle le liant variable est un liant aqueux et comprend un groupe ester.

6. Cellule unitaire selon la revendication 1, dans laquelle le liant variable présente un degré de réticulation de 80 % en moles à 98 % en moles.

7. Cellule unitaire selon la revendication 1, dans laquelle le substrat séparateur est un substrat en polyoléfine.

8. Cellule unitaire selon la revendication 1, dans laquelle la couche de revêtement comprend un matériau inorganique.

9. Procédé de fabrication de la cellule unitaire selon l'une quelconque des revendications 1 à 8, le procédé comprenant :
S1) mélanger un polymère liant variable présentant une taille de particule changée en fonction du pH avec un matériau inorganique afin de former une suspension de couche de revêtement ; et
S2) appliquer la suspension de couche de revêtement sur au moins une surface d'un substrat séparateur afin de former une couche de revêtement,
**caractérisé en ce que** :
le polymère liant variable devient un gel lors de l'imprégnation d'une solution électrolytique,
une teneur en gel du liant variable est supérieure à 60 % et inférieure à 100 % dans la solution électrolytique, et
le polymère liant variable est inclus de sorte à représenter 50 % en poids ou plus sur la base de l'intégralité de la matière solide de la couche de revêtement.

10. Procédé selon la revendication 9, dans lequel, à l'étape S1, la suspension de couche de revêtement présente un pH de 7 ou plus.

11. Procédé selon la revendication 9, dans lequel, à l'étape S1, la suspension de couche de revêtement comprend en outre un solvant présentant un pH de 7 ou plus.

12. Procédé selon la revendication 9, dans lequel, à l'étape S1, le liant variable présente une taille de particule de 200 nm ou plus.

13. Procédé selon la revendication 9, comprenant en outre S3) une étape consistant à permettre au liant variable de la couche de revêtement de réagir avec des ions hydrogène générés par réaction d'une solution électrolytique, dans lequel une taille de particule du liant variable est réduite.
